# EUROPEAN PATENT APPLICATION

(11) **EP 3 095 627 A1**
(43) Date of publication of application: **23.11.2016**
(21) Application number: 16170676.7
(22) Date of filing: 20.05.2016
(51) Int. Cl.: B60J 5/04, B60J 5/06

(54) **VEHICLE DOOR STRUCTURE**

(30) Priority: 21.05.2015 JP 2015103557
(71) Applicant: KABUSHIKI KAISHA TOYOTA JIDOSHOKKI, Kariya-shi, Aichi-ken, 448-8671 (JP)
(72) Inventor: CHIBA, Akira, Kariya-shi, Aichi-ken, 448-8671 (JP); KUNO, Hiroshi, Kariya-shi, Aichi-ken, 448-8671 (JP)
(74) Representative: Winter, Brandl, Fürniss, Hübner, Röss, Kaiser, Polte - Partnerschaft mbB

(57) **Abstract**

A vehicle door structure is provided that prevents a swing door from being opened when a slide door and the swing door are not locked. A vehicle door structure (1) includes a lock mechanism (60) configured to lock a swing door (7) with respect to a vehicle body (2) at any position of a slide door (6) other than a fully open position and to lock the slide door (6) with respect to the swing door (7) and cancel a locked condition of the swing door (7) with respect to the vehicle body (2) at the fully open position of the slide door (6).

## Description

### TECHNICAL FIELD

The present invention relates to a vehicle door structure including a slide door panel that slidably opens and closes and a swing door panel that swingably opens and closes.

### BACKGROUND

A technique disclosed in Japanese Unexamined Patent Publication No. 2011-46271, for example, has been known as a conventional vehicle door structure. The vehicle door structure disclosed in Japanese Unexamined Patent Publication No. 2011-46271 includes a slide door that opens and closes a front part of a rear door opening and a swing door that opens and closes, with the slide door, a rear part of the rear door opening. The slide door slidably moves in an anterior-posterior direction of a vehicle body via a sliding mechanism. The swing door, in a condition in which the swing door overlaps a fully opened slide door, swings with respect to the vehicle body via a hinge mechanism. The vehicle door structure further includes a swing door open/close restriction mechanism and a slide restriction mechanism. Specifically, the swing door open/close restriction mechanism locks the swing door and the vehicle body when the swing door is in a fully closed condition. The slide restriction mechanism locks the slide door and the swing door when the slide door is in a fully open condition.

In the vehicle door structure in the known art, when an operation is performed to open the swing door when the slide door and the swing door are not locked, however, the slide door may shake or the slide door may move with respect to the swing door while the swing door is swung.

It is an object of the present invention is to provide a vehicle door structure that prevents a swing door from being opened when a slide door and the swing door are not locked.

### SUMMARY

A vehicle door structure according to an aspect of the present invention includes a slide door configured to open and close a first part of a door opening disposed in a vehicle body and a swing door configured to open and close, with the slide door, a second part of the door opening. The vehicle door structure includes a lock mechanism configured to lock the swing door with respect to the vehicle body at any position of the slide door other than a fully open position and to lock the slide door with respect to the swing door and cancel a locked condition of the swing door with respect to the vehicle body at the fully open position of the slide door.

In this vehicle door structure, the lock mechanism locks the swing door with respect to the vehicle body at any position of the slide door other than the fully open position and locks the slide door with respect to the swing door and cancels the locked condition of the swing door with respect to the vehicle body at the fully open position of the slide door. With the foregoing arrangements, the locked condition of swing door with respect to the vehicle door is canceled so that the swing door can be opened and closed only when the swing door is locked with respect to the slide door at the fully open position of the slide door. Thus, the swing door cannot be opened when the slide door is yet to reach the fully open position. The slide door can then be prevented from being slid with the swing door opened. As a result, the vehicle door structure can prevent the swing door from being opened when the slide door and the swing door are not locked.

In an embodiment, the lock mechanism may include: a first locked section disposed at a front end portion of the slide door; a second locked section disposed on the vehicle body on a front end portion side at a fully closed position of the swing door; and an engagement body disposed on the swing door. The engagement body engages with the second locked section at any position of the slide door other than the fully open position, and engages with the first locked section and releases engagement with the second locked section at the fully open position of the slide door. The foregoing arrangements enable the lock mechanism to lock the swing door with respect to the vehicle body at any position of the slide door other than the fully open position and to lock the slide door with respect to the swing door and cancel the locked condition of the swing door with respect to the vehicle body at the fully open position of the slide door.

In an embodiment, the engagement body may be disposed so as to be rotatable when the first locked section advances or retracts as the slide door is moved. The engagement body may be rotated in a first direction by advancing movement of the first locked section to engage with the first locked section and release engagement with the second locked section, and rotated in a second direction that is opposite to the first direction by retracting movement of the first locked section to release engagement with the first locked section and engage with the second locked section. The foregoing arrangements enable the lock mechanism to lock and unlock the slide door with respect to the vehicle body and to lock and unlock the slide door with respect to the swing door in accordance with the movement of the slide door.

In an embodiment, the engagement body may include a first engagement portion configured to engage with the first locked section and a second engagement portion configured to engage with the second locked section. The second engagement portion may include a first portion at which the second locked section is located at any position of the slide door other than the fully open position and a second portion at which the second locked section is located at the fully open position of the slide door. The second portion may be opposed to the vehicle body at the fully open position of the slide door. The foregoing arrangements enable the engagement body to release engagement with the second locked section disposed on the vehicle body at the fully open position of the slide door. Thus, the vehicle door structure enables the swing door to be opened and closed at the fully open position of the slide door.

In an embodiment, the vehicle door structure may include a lock unit configured to lock the slide door with respect to the swing door. The lock unit may include: a protruding section that is disposed on the swing door and protrudes toward the vehicle body when the swing door is open; and a locked section that is disposed on the slide door and is located between the vehicle body and the swing door at the fully open position of the slide door to be locked by the protruding section. With the foregoing arrangements, the locked section is locked by the protruding section when the swing door is opened, so that the swing door is restricted from being moved in a direction in which the swing door opens. Thus, the slide door does not open even when a handle is operated to open the slide door while the swing door is open. As a result, the slide door can be reliably prevented from being opened when the swing door is open.

In an embodiment, the vehicle door structure may include a disabling mechanism configured to disable, when the second locked section is not located at the second portion at the fully open position of the slide door, an operation of a handle controlling opening and closing of the slide door. The foregoing arrangement disables the operation of the handle when the second locked section is not located at the second portion, specifically, when the swing door is open. Thus, the locked condition of the slide door can be prevented from being released when the swing door is open. As a result, the slide door can be reliably prevented from being opened when the swing door is open.

The present invention prevents the swing door from being opened when the slide door and the swing door are not locked.

### BRIEF DESCRIPTION OF THE DRAWINGS

FIG. 1 is a side elevational view illustrating a vehicle that includes a vehicle door structure according to an embodiment.
FIGs. 2A, 2B, and 2C are perspective views illustrating how a slide door and a swing door illustrated in FIG. 1 are opened.
FIG. 3 is a perspective view illustrating a slide door lock unit.
FIGs. 4A and 4B are diagrams illustrating operations of the slide door lock unit.
FIG. 5 is a diagram illustrating a lock unit.
FIG. 6A is a perspective view illustrating a first striker and FIG. 6B is a perspective view illustrating a second striker.
FIGs. 7A, 7B, and 7C are diagrams illustrating operations of the lock unit.
FIGs. 8A, 8B, and 8C are diagrams illustrating operations of the lock unit.
FIGs. 9A and 9B are diagrams illustrating operations of the lock unit.
FIGs. 10A and 10B are diagrams illustrating operations of the lock unit.
FIG. 11 is a diagram illustrating a lock unit of a vehicle door structure according to another embodiment.
FIGs. 12A and 12B are diagrams illustrating operations of a lock unit.

### DETAILED DESCRIPTION

The following details preferred embodiments of the present invention with reference to the accompanying drawings. In the drawings, like or corresponding parts are identified by the same reference numerals and descriptions for those parts will not be duplicated.

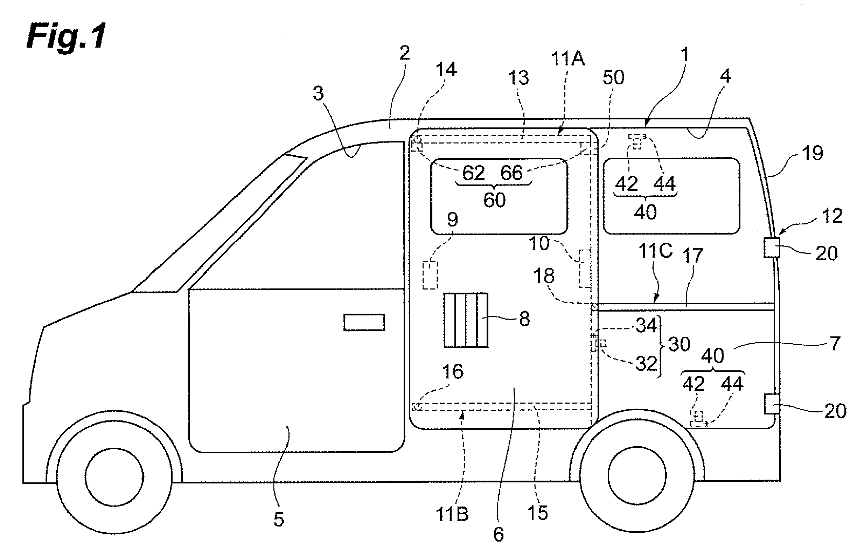

FIG. 1 is a side elevational view illustrating a vehicle that includes a vehicle door structure according to an embodiment. As illustrated in FIG. 1, this vehicle door structure 1 is applied to a side portion of a vehicle body 2. The side portion of the vehicle body 2 includes a front door opening 3 and a rear door opening 4. Specifically, the front door opening 3 is disposed lateral to a front seat. The rear door opening 4 is disposed lateral to a cargo compartment that is disposed posterior to the front seat. The front door opening 3 is opened and closed by a front door 5.

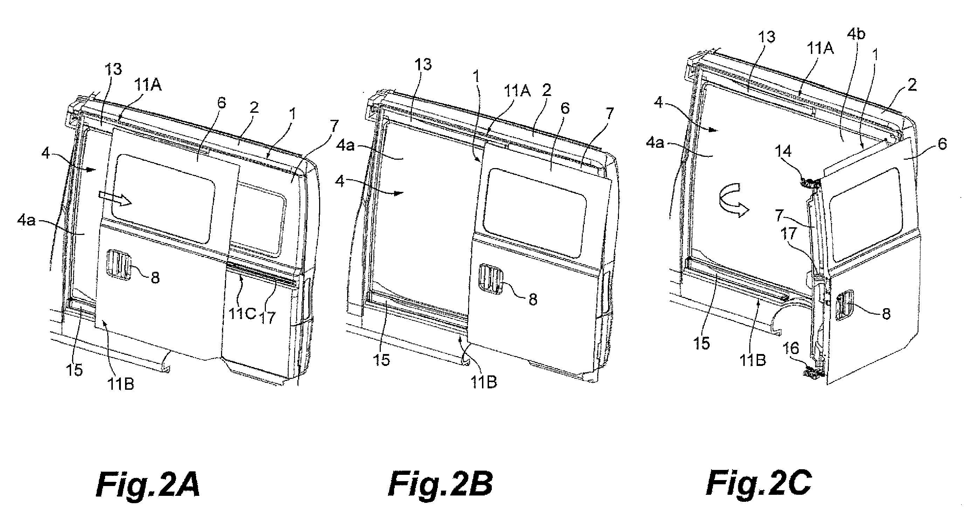

The rear door opening 4 is opened and closed by a slide door 6 that slidably opens and closes and a swing door 7 that swingably opens and closes. As illustrated in FIGs. 2A and 2B, the slide door 6 slides in an anterior-posterior direction of the vehicle body 2 to thereby open and close a front part 4a (first part) in the rear door opening 4. The slide door 6, when in a fully open condition (fully open position), is located on the outside of the swing door 7 to thereby overlap the swing door 7 as illustrated in FIG. 2C.

The swing door 7, when in the condition in which the slide door 6 overlaps the swing door 7 as illustrated in FIG. 2C, swings with respect to the vehicle body 2 to thereby be able to open and close, with the slide door 6, a rear part 4b (second part) in the rear door opening 4.

The slide door 6 includes a slide door outer handle 8 disposed on an outer side surface thereof. The slide door 6 includes a slide door inner handle 9 disposed on an inner side surface thereof. The slide door outer handle 8 and the slide door inner handle 9 are operated to open and close the slide door 6. The swing door 7 includes a swing door handle 10 disposed at a front end thereof. The swing door handle 10 is operated to open the swing door 7. Specifically, operating the slide door outer handle 8 or the slide door inner handle 9, with the slide door 6 in the fully closed condition, in a direction in which the slide door 6 is opened cancels a locked condition of a slide door full closure lock unit 30 to be described later. Additionally, operating the slide door outer handle 8 or the slide door inner handle 9, with the slide door 6 in the fully open condition, in a direction in which the slide door 6 is closed causes a locking bar 68 to be described later to swing to thereby release engagement of an engagement body 67 of a lock unit 60.

The vehicle door structure 1 includes slide door support units 11A, 11B, and 11 C and a swing door support unit 12. Specifically, the slide door support units 11 A, 11B, and 11C support the slide door 6 such that the slide door 6 can be slid (opened and closed) in the anterior-posterior direction of the vehicle body 2. The swing door support unit 12 supports the swing door 7 swingably (openably) with respect to the vehicle body 2.

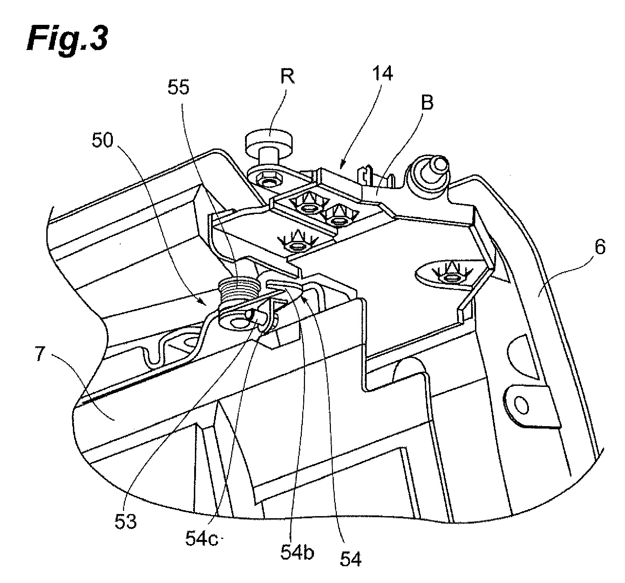

The slide door support unit 11A is disposed at an upper portion of the vehicle body 2 so as to extend in the anterior-posterior direction of the vehicle body 2 (the direction in which the slide door 6 is opened and closed). The slide door support unit 11A includes an upper slide rail 13 and a guide unit 14. The upper slide rail 13 allows the slide door 6 to slide with respect to the vehicle body 2. The guide unit 14 is disposed at an upper portion at a front end of the slide door 6. The guide unit 14 is guided along the upper slide rail 13 while the slide door 6 is being slid. When the slide door 6 reaches a fully open position of the slide door 6, the guide unit 14 disengages from the upper slide rail 13 and is then movable in a vehicle width direction. Specifically, as illustrated in FIG. 3, the guide unit 14 includes a roller R and the roller R disengages from the upper slide rail 13. The roller R is rotatably supported by a base B. The base B is disposed at the front end and at the upper portion of the slide door 6.

The slide door support unit 11B is disposed at a lower portion of the vehicle body 2 so as to extend in the anterior-posterior direction of the vehicle body 2. The slide door support unit 11B includes a lower slide rail 15 and a guide unit 16. The lower slide rail 15 allows the slide door 6 to slide with respect to the vehicle body 2. The guide unit 16 is disposed at a lower portion at the front end of the slide door 6. The guide unit 16 is guided along the lower slide rail 15 while the slide door 6 is being slid. When the slide door 6 reaches the fully open position of the slide door 6, the guide unit 16 disengages from the lower slide rail 15 and is then movable in the vehicle width direction.

The slide door support unit 11C is disposed on an outer side surface of the swing door 7 at around a center thereof. The slide door support unit 11C includes an intermediate slide rail 17 and a guide unit 18. The intermediate slide rail 17 allows the slide door 6 to slide with respect to the swing door 7. The guide unit 18 is disposed at a rear end of the slide door 6. The guide unit 18 is guided along the intermediate slide rail 17 while the slide door 6 is being slid.

The swing door support unit 12 includes a rear pillar 19 and two hinges 20. Specifically, the rear pillar 19 is disposed at a rear end of the vehicle body 2. The two upper and lower hinges 20 connect the swing door 7 swingably to the rear pillar 19.

The vehicle door structure 1 configured as described above includes the slide door full closure lock unit 30, a swing door lock unit 40, a slide door lock unit (lock unit) 50, and the lock unit (lock mechanism) 60.

The slide door full closure lock unit 30 locks (fixes) the slide door 6 with respect to the swing door 7 when the slide door 6 is in the fully closed condition. As illustrated in FIG. 1, the slide door full closure lock unit 30 includes a lock member 32 and a striker 34. Specifically, the lock member 32 is disposed at the rear end of the slide door 6. The striker 34 is disposed at the front end of the swing door 7. The striker 34 engages with a latch (not illustrated) of the lock member 32. In the slide door full closure lock unit 30, bringing the slide door 6 into the fully closed condition causes the latch of the lock member 32 to engage with the striker 34, resulting in the slide door 6 and the swing door 7 being in a locked condition.

The lock member 32 is connected to the slide door outer handle 8 and the slide door inner handle 9 by cables (not illustrated). The locked condition between the slide door 6 and the swing door 7 achieved by the slide door full closure lock unit 30 is canceled by an operation to open the slide door 6 using the slide door outer handle 8 or the slide door inner handle 9.

The swing door lock unit 40 locks the swing door 7 with respect to the vehicle body 2 when the swing door 7 is in the fully closed condition. The swing door lock unit 40 is disposed at two places: one at an upper portion and the other at a lower portion of the swing door 7. The swing door lock units 40 each include a lock member 42 and a striker 44. Specifically, the lock member 42 is shaped like a bolt and disposed at the swing door 7. The striker 44 is disposed on the vehicle body 2. The striker 44 engages with the lock member 42. In each of the swing door lock units 40, bringing the swing door 7 into the fully closed condition allows an urging force of a spring (not illustrated) to cause the lock member 42 to protrude from the swing door 7 toward the vehicle body 2, so that the lock member 42 engages with the striker 44, thus resulting in the swing door 7 and the vehicle body 2 being in a locked condition.

The lock member 42 is connected to the swing door handle 10 by a cable (not illustrated). The locked condition between the swing door 7 and the vehicle body 2 achieved by the swing door lock units 40 is canceled by an operation to open the swing door 7 using the swing door handle 10.

The slide door lock unit 50 locks the slide door 6 with respect to the swing door 7. The slide door lock unit 50 locks the slide door 6 with respect to the swing door 7 when the swing door 7 is opened. The slide door lock unit 50 includes a locking section (protruding section) 51 and a locked section 52. Specifically, the locking section 51 is disposed on the swing door 7. The locked section 52 is disposed on the slide door 6.

The locking section 51 is disposed at an upper end of the swing door 7 anterior thereto. The locking section 51 includes a detection pin 53, a swing hook 54, and a spring 55.

The detection pin 53 abuts on a body surface 2a of the vehicle body 2 with the swing door 7 in the closed condition. The detection pin 53 includes a substantially cylindrical portion. The detection pin 53 is disposed such that a leading end thereof abuts on the body surface 2a of the vehicle body 2 with the swing door 7 in the closed condition. Specifically, when the swing door 7 is opened, the detection pin 53 is spaced away from the body surface 2a of the vehicle body 2.

The swing hook 54 locks the locked section 52. The swing hook 54 is substantially L-shaped. The swing hook 54 includes a base portion 54a and a hook portion 54b that is disposed at a first end of the base portion 54a. The base portion 54a is shaped to be tapered toward the first end from a second end.

The base portion 54a has the second end journaled on the swing door 7 about an axis that extends in a vertical direction of the vehicle body 2. This configuration enables the swing hook 54 to be swingable in a horizontal plane about the axis. The swing hook 54 is connected to the detection pin 53 by a connecting member 54c (see FIG. 3) and is swingable in synchronism with the detection pin 53. Specifically, the swing hook 54 swings by being operatively connected to the detection pin 53. The hook portion 54b has a leading end shorter than a leading end of the detection pin 53. Additionally, the detection pin 53 is connected to a position that is closer to the axis than the hook portion 54b is.

The spring 55 urges the swing hook 54 in a direction in which the swing hook 54 swings toward the body surface 2a of the vehicle body 2. The spring 55 is, for example, a torsion spring. The spring 55 is disposed on the second end side of the base portion 54a of the swing hook 54. The spring 55 urges the swing hook 54 at all times to swing in a clockwise direction.

With the foregoing configuration, in the locking section 51, the detection pin 53 is spaced away from the body surface 2a of the vehicle body 2 when the swing door 7 is opened and, at the same time, the swing hook 54 is swung toward the vehicle body 2 by the urging force of the spring 55. In the locking section 51, when the swing door 7 is opened, the swing hook 54 automatically protrudes toward the base B of the slide door 6 (on the side of the vehicle body 2).

The locked section 52 is disposed at the base B of the guide unit 14. The base B is fixed to the slide door 6. A first striker 62 to be described later, for example, is mounted on the base B. The locked section 52 is, for example, a recess formed in the base B. Specifically, part of the base B may be cut out to form the recess. The locked section 52 is open to a lower portion of the base B. The locked section 52 is disposed along a trajectory of the hook portion 54b formed when the swing hook 54 swings.

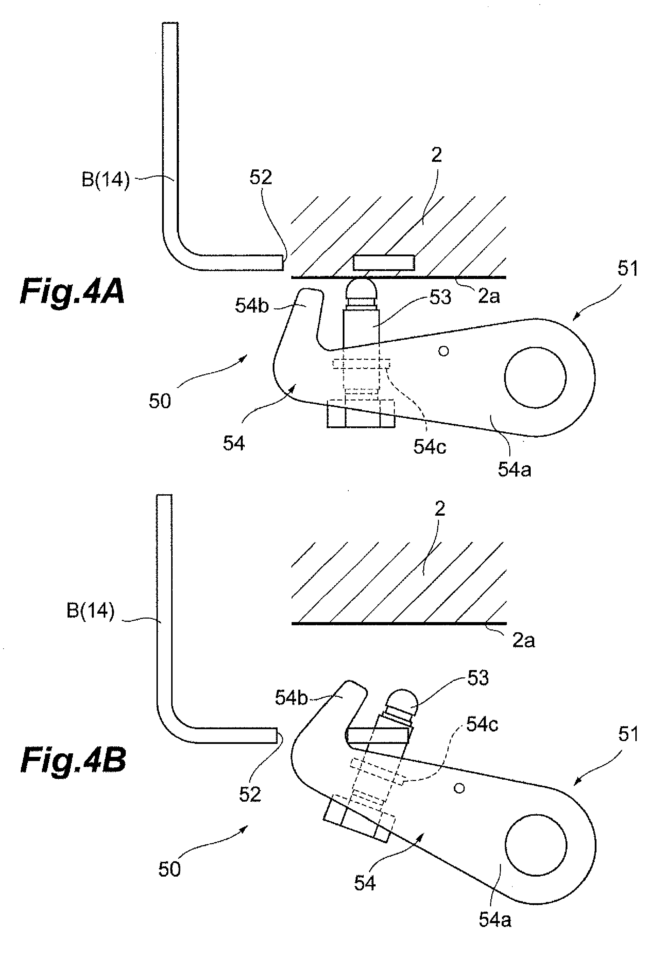

The following describes, with reference to FIGs. 4A and 4B, operations of the slide door lock unit 50 that is configured as described above. As illustrated in FIG. 4A, when the swing door 7 is in the closed position, the detection pin 53 abuts on the body surface 2a of the vehicle body 2. With the slide door 6 in the fully open position, the locked section 52 in the base B is located on the side of the vehicle body 2 relative to the hook portion 54b.

As illustrated in FIG. 4B, when the swing door 7 is opened from the foregoing condition, the detection pin 53 is spaced away from the body surface 2a of the vehicle body 2. At this time, the swing hook 54 that is operatively connected to the detection pin 53 is swung in the clockwise direction by the urging of the spring 55, so that the hook portion 54b protrudes toward the slide door 6, specifically, the base B. The swing hook 54 thus enters the locked section 52, so that the hook portion 54b locks the locked section 52 in the base B. The foregoing operation results in the slide door 6 being locked with respect to the swing door 7 in the slide door lock unit 50.

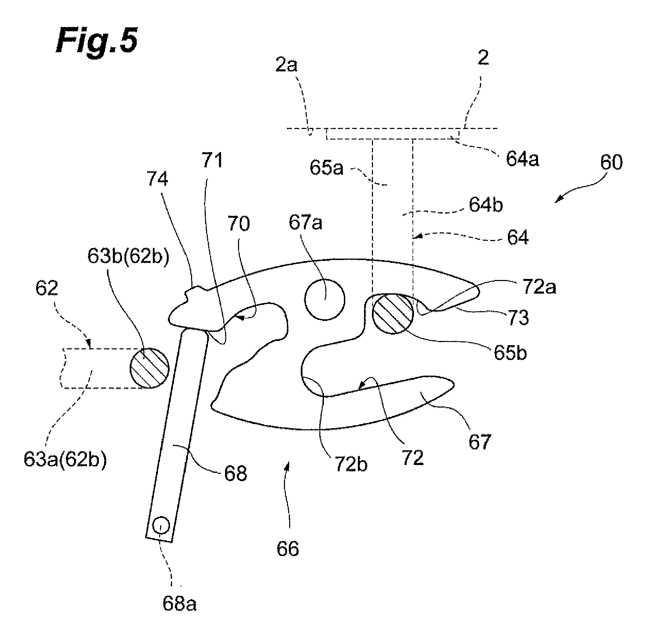

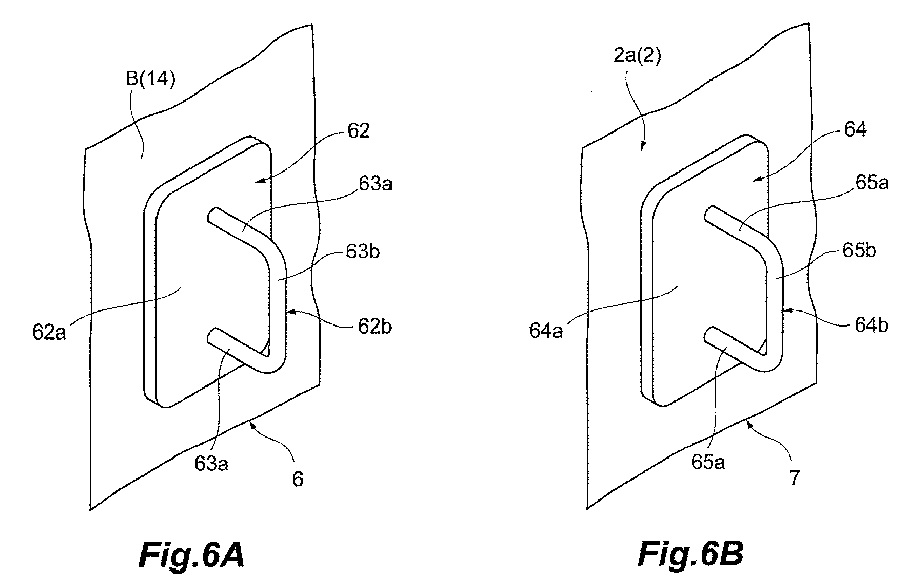

The lock unit 60 locks the slide door 6 and the swing door 7, and the swing door 7 and the vehicle body 2. When the slide door 6 is at any position other than the fully open position, the lock unit 60 locks the swing door 7 with respect to the vehicle body 2. With the slide door 6 at the fully open position, the lock unit 60 locks the slide door 6 with respect to the swing door 7 and cancels the locked condition of the swing door 7 with respect to the vehicle body 2. As illustrated in FIG. 5 or FIGs. 6A and 6B, the lock unit 60 includes the first striker 62 (first locked section), a second striker (second locked section) 64, and an engagement mechanism 66.

The first striker 62 is disposed on the slide door 6. As illustrated in FIG. 6A, the first striker 62 includes a base portion 62a and a loop body 62b. The base portion 62a is formed of a high strength material such as steel plate. The base portion 62a has a substantially rectangular shape. The loop body 62b is formed through bending of a high strength material such as a steel bar. The loop body 62b is substantially U-shaped. The loop body 62b includes a pair of risers 63a that stand up from the base portion 62a and a connector 63b that connects ends of the risers 63a.

The first striker 62 is disposed on the base B disposed on the slide door 6. Specifically, the first striker 62 is disposed at the front end and at the upper portion of the slide door 6. The base portion 62a is fixed (bolted or welded) to the base B, and the first striker 62 is thus mounted on the base B. In the loop body 62b, the risers 63a extend in the anterior-posterior direction of the vehicle body 2, while the connector 63b extends in a height direction of the vehicle body 2. The first striker 62 moves with the slide door 6 as the slide door 6 (guide unit 14) slides.

The second striker 64 is disposed on the vehicle body 2. As illustrated in FIG. 6B, the second striker 64 includes a base portion 64a and a loop body 64b. The loop body 64b includes a pair of risers 65a that stand up from the base portion 64a and a connector 65b that connects ends of the risers 65a.

The second striker 64 is disposed at a position that corresponds to an upper portion at a front end of the swing door 7 at the fully closed position. The base portion 64a is fixed to the body surface 2a, and the second striker 64 is thus mounted on the body surface 2a. In the loop body 64b, the risers 65a extend in the width direction of the vehicle body 2 so as to protrude from the body surface 2a toward the outside, while the connector 65b extends in the height direction of the vehicle body 2.

The engagement mechanism 66 engages the first striker 62 and the second striker 64. The engagement mechanism 66 includes the engagement body 67 and the locking bar 68.

The engagement body 67 is formed of a sheet-shaped member. The engagement body 67 is disposed on the swing door 7. Specifically, the engagement body 67 is disposed at the front end and at the upper portion of the swing door 7. More specifically, the engagement body 67 is disposed at a position above the locking section 51 of the slide door lock unit 50. The engagement body 67 is rotatable about an axis 67a. The axis 67a is fixed to the swing door 7 and extends in the height direction of the vehicle body 2. With the foregoing arrangements, the engagement body 67 rotates in the horizontal plane.

The engagement body 67 includes a first engagement portion 70 and a second engagement portion 72. The first engagement portion 70 engages with the first striker 62. The second engagement portion 72 engages with the second striker 64. The engagement body 67 is rotated when the first striker 62 (connector 63b) advances or retracts as the slide door 6 is moved. The engagement body 67 is rotated by the advancing movement of the first striker 62 to thereby engage with the first striker 62 and release engagement with the second striker 64. The engagement body 67 is rotated by the retracting movement of the first striker 62 to thereby release engagement with the first striker 62 and engage with the second striker 64.

The first engagement portion 70 is configured so as to allow the first striker 62 to advance thereto and to retract therefrom. The first engagement portion 70 has an opening 71 through which the first striker 62 advances and retracts. The opening 71 is formed to be wider than other portions of the first engagement portion 70. Part of the opening 71 in the first engagement portion 70 is formed to be flat.

The second engagement portion 72 is configured so as to allow the second striker 64 to advance thereto and to retract therefrom. The second engagement portion 72 has an opening 73 through which the second striker 64 advances and retracts. Additionally, the second engagement portion 72 includes a first portion 72a and a second portion 72b. The second striker 64 is located at the first portion 72a when the slide door 6 is at any position other than the fully open position. The second striker 64 is located at the second portion 72b when the slide door 6 is at the fully open position. The second engagement portion 72 is shaped such that the second striker 64 does not retract (disengage) except when the second striker 64 is located at the second portion 72b. Specifically, the second engagement portion 72 allows the second striker 64 to retract from (leave) the engagement body 67 only when the second striker 64 is located at the second portion 72b.

The engagement body 67 further has a locking protrusion 74. The locking protrusion 74 protrudes to the outside from an outer edge of the engagement body 67. Specifically, the locking protrusion 74 is disposed at a position in the engagement body 67 on the side close to the opening 71 in the first engagement portion 70. The locking protrusion 74 locks the locking bar 68 to be described later.

The locking bar 68 restricts rotation of the engagement body 67. The locking bar 68 is a bar-shaped member. The locking bar 68 has a first end in a longitudinal direction thereof supported on a shaft 68a. The locking bar 68 is swingable about the shaft 68a. The shaft 68a is fixed to the swing door 7 and extends in the height direction of the vehicle body 2. The locking bar 68 swings in the horizontal plane.

The locking bar 68 is urged in a counterclockwise direction by an urging member (e.g., spring) not illustrated. The locking bar 68 at a predetermined position is restricted from swinging in the counterclockwise direction. As illustrated in FIG. 5, the locking bar 68 is located at the predetermined position when the locking bar 68 abuts on the opening 71 in the first engagement portion 70 of the engagement body 67. The locking bar 68 is restricted from swinging through abutment thereof with an abutment member not illustrated. The locking bar 68 is connected to the slide door outer handle 8 and the slide door inner handle 9 by cables (not illustrated). The locking bar 68 is swung in the clockwise direction through an operation of the slide door outer handle 8 or the slide door inner handle 9.

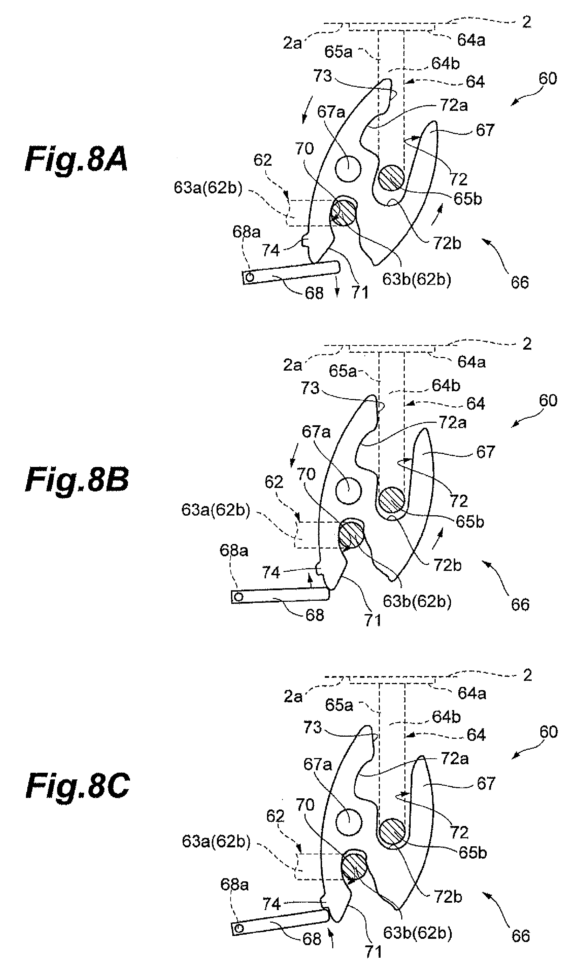

The locking bar 68 at the predetermined position abuts on the opening 71 in the first engagement portion 70 of the engagement body 67. Thus, the locking bar 68 restricts rotation of the engagement body 67 when the second striker 64 is located at the first portion 72a of the second engagement portion 72 of the engagement body 67. The locking bar 68 is locked (caught) by the locking protrusion 74 of the engagement body 67 (see FIG. 8C). As a result, the locking bar 68 restricts the rotation of the engagement body 67 when the second striker 64 is located at the second portion 72b of the second engagement portion 72 of the engagement body 67 or when the second striker 64 is not in the second engagement portion 72.

The following describes operations of the lock unit 60. The following first describes operations of the lock unit 60 when the slide door 6 is opened to cancel the locked condition between the swing door 7 and the vehicle body 2.

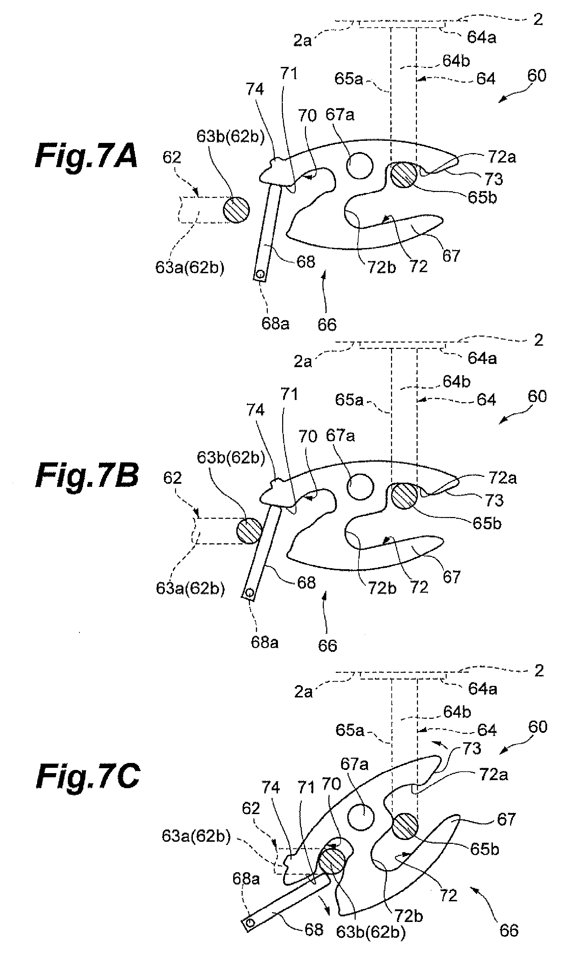

As illustrated in FIG. 7A, while the slide door 6 is being moved and is yet to reach the fully open position, the second striker 64 is located at the first portion 72a of the second engagement portion 72 in the engagement body 67. Thus, the engagement body 67 locks the slide door 6 with respect to the vehicle body 2. Meanwhile, the locking bar 68 abuts on the opening 71 in the first engagement portion 70. Thus, the engagement body 67 is restricted from rotating in the counterclockwise direction.

As illustrated in FIG. 7B, when the slide door 6 is further opened, the first striker 62 disposed on the slide door 6 contacts the locking bar 68. The first striker 62 swings the locking bar 68 in the clockwise direction as the swing door 7 is moved and enters the first engagement portion 70 of the engagement body 67. When the locking bar 68 is swung as illustrated in FIG. 7C, the restriction of the engagement body 67 from rotating by the locking bar 68 is canceled, so that the engagement body 67 can rotate. The entry of the first striker 62 in the first engagement portion 70 causes the engagement body 67 to rotate in a first direction (counterclockwise direction). As a result, the second striker 64 disengages from the first portion 72a of the second engagement portion 72 in the engagement body 67.

As illustrated in FIG. 8A, when the engagement body 67 further rotates, the locking bar 68 that abuts on the engagement body 67 further swings. As illustrated in FIG. 8B, when the engagement body 67 rotates at a predetermined angle, the locking bar 68 climbs over an apex of the opening 71. As illustrated in FIG. 8C, when the slide door 6 reaches the fully open position, the locking bar 68 is locked by the locking protrusion 74 of the engagement body 67. At this time, the locking bar 68 is urged in the counterclockwise direction by the urging force of the urging member. Thus, an engagement condition between the locking bar 68 and the locking protrusion 74 is maintained. Under the foregoing condition, the second striker 64 is located at the second portion 72b of the second engagement portion 72 in the engagement body 67. At this time, the second portion 72b is opposed to the vehicle body 2. As a result, the second striker 64 is now able to retract from the engagement body 67. Specifically, the locked condition between the slide door 6 and the engagement body 67 is canceled and an operation of the swing door handle 10 allows the slide door 6 to be opened. Additionally, because the engagement body 67 is restricted from rotation, the slide door 6 is fixed to the swing door 7. Thus, the slide door 6 is restricted from being moved in the direction in which the slide door 6 is opened. Operating the swing door handle 10 under the foregoing condition to thereby release the engagement between the bolt-shaped lock member 42 and the striker 44 enables the swing door 7 to be opened.

The following describes operations of the lock unit 60 when the slide door 6 is closed to thereby lock the swing door 7 and the vehicle body 2.

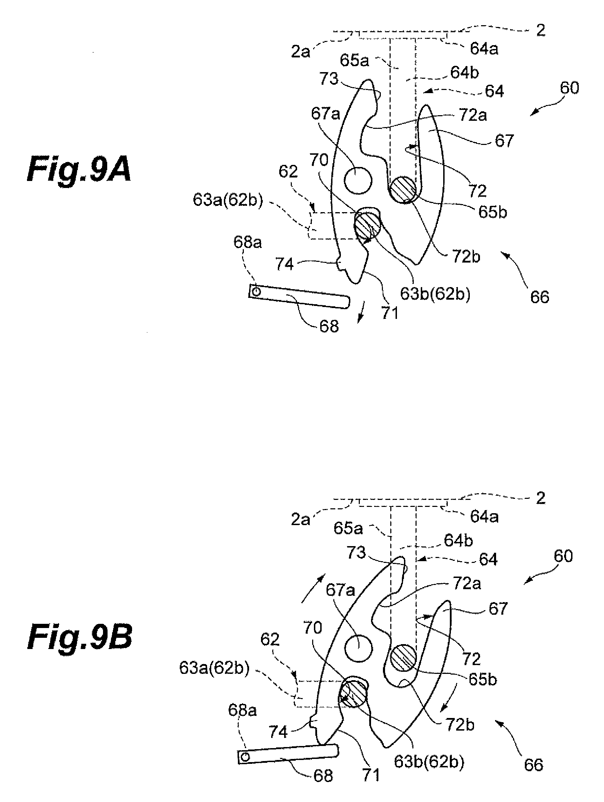

As illustrated in FIG. 9A, when the slide door outer handle 8 or the slide door inner handle 9 is operated with the swing door 7 in the closed condition, the locking bar 68 is swung in the clockwise direction in operative association with either the slide door outer handle 8 or the slide door inner handle 9. This operation causes the engagement between the locking bar 68 and the locking protrusion 74 of the engagement body 67 to be released, thus allowing the engagement body 67 to be rotated. As illustrated in FIG. 9B, when the slide door 6 is moved in the direction in which the slide door 6 is closed under this condition, the engagement body 67 is rotated in a second direction (clockwise direction) as the slide door 6 is moved. This causes the second striker 64 to disengage from the second portion 72b of the second engagement portion 72 in the engagement body 67.

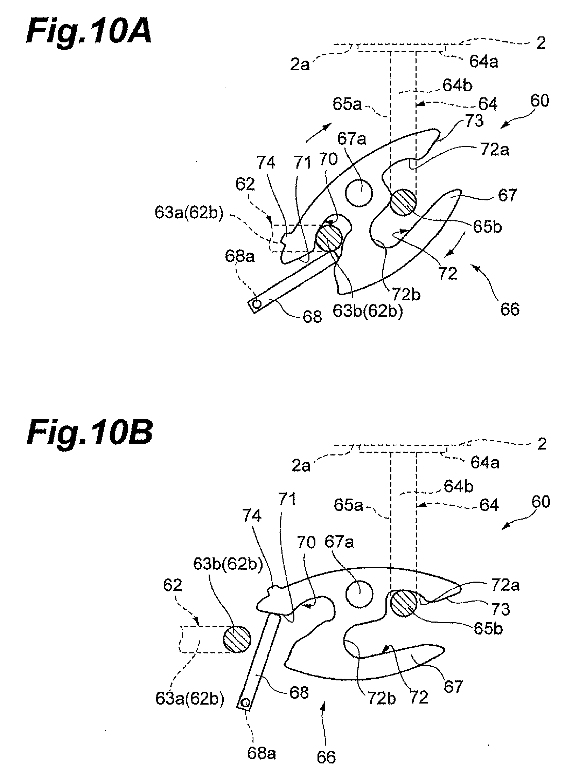

As illustrated in FIG. 10A, when the slide door 6 is moved further in the direction in which the slide door 6 is closed, the engagement body 67 rotates and the locking bar 68 is accordingly swung in the counterclockwise direction by the urging force of the urging member. As illustrated in FIG. 10B, when the first striker 62 retracts from (leaves) the first engagement portion 70 of the engagement body 67, the locking bar 68 stops swinging at a predetermined position and abuts on the opening 71 in the first engagement portion 70. As a result, the engagement body 67 is restricted from rotation by the locking bar 68. At this time, the second striker 64 is located at the first portion 72a of the second engagement portion 72 in the engagement body 67. Thus, the engagement body 67 locks the swing door 7 with respect to the vehicle body 2.

As described above, the vehicle door structure 1 according to the embodiment includes the lock unit 60. When the slide door 6 is at any position other than the fully open position, the lock unit 60 locks the swing door 7 with respect to the vehicle body 2. With the slide door 6 at the fully open position, the lock unit 60 restricts the slide door 6 from moving in the direction in which the slide door 6 is closed and cancels the locked condition of the swing door 7 with respect to the vehicle body 2. This arrangement allows the swing door handle 10 to be operated to unlock the swing door 7 and to allow the swing door 7 to be opened and closed only when the slide door 6 is located at the fully open position and is restricted from moving in the direction in which the slide door 6 is closed. Thus, the swing door 7 cannot be opened when the slide door 6 is yet to reach the fully open position. As a result, the vehicle door structure 1 is configured to prevent the swing door 7 from being opened when the slide door 6 and the swing door 7 are not locked.

In the embodiment, preferably, the lock unit 60 includes the first striker 62 disposed at the front end of the slide door 6, the second striker 64 disposed on the vehicle body 2 on the front end side of the swing door 7 at the fully closed position, and the engagement body 67 that is disposed on the swing door 7 and that, at any position other than the fully open position, engages with the second striker 64 and that, at the fully open position, engages with the first striker 62 and releases engagement with the second striker 64. The foregoing arrangements enable the lock unit 60 to lock the swing door 7 with respect to the vehicle body 2 at any position of the slide door 6 other than the fully open position and enable the lock unit 60 to lock the slide door 6 with respect to the swing door 7 and unlock the swing door 7 with respect to the vehicle body 2 at the fully open position of the slide door 6. Additionally, the lock unit 60 includes the first striker 62, the second striker 64, and the engagement body 67 (engagement mechanism 66). Thus, the lock unit 60 achieves a simplified configuration.

In the embodiment, the engagement body 67 is configured so as to be rotatable in accordance with movements made by the first striker 62 to advance and retract as the slide door 6 is moved. When the first striker 62 advances, the engagement body 67 rotates in the first direction to thereby engage with the first striker 62 and release engagement with the second striker 64. When the first striker 62 retracts, the engagement body 67 rotates in the second direction to thereby release engagement with the first striker 62 and engage with the second striker 64. The foregoing arrangements enable the lock unit 60 to lock or unlock the slide door 6 with respect to the vehicle body 2 and to lock or unlock the slide door 6 with respect to the swing door 7 in accordance with the movement of the slide door 6.

In the embodiment, the engagement body 67 includes the first engagement portion 70 that engages with the first striker 62 and the second engagement portion 72 that engages with the second striker 64. The second engagement portion 72 includes the first portion 72a at which the second striker 64 is located at any position of the slide door 6 other than the fully open position and the second portion 72b at which the second striker 64 is located at the fully open position of the slide door 6. The second portion 72b is opposed to the vehicle body 2 when the slide door 6 is at the fully open position. The foregoing arrangements enable the engagement body 67 to release engagement with the second striker 64 disposed on the vehicle body 2 at the fully open position of the slide door 6. Thus, the vehicle door structure 1 enables the swing door 7 to be opened and closed at the fully open position of the slide door 6.

In the embodiment, the vehicle door structure 1 includes the slide door lock unit 50 that locks the slide door 6 with respect to the swing door 7 when the swing door 7 is opened. The slide door lock unit 50 includes the locking section 51 that is disposed on the swing door 7 and that protrudes toward the vehicle body 2 when the swing door 7 is opened and the locked section 52 that is disposed on the slide door 6 and that is located between the vehicle body 2 and the swing door 7 and is locked by the locking section 51 at the fully open position of the slide door 6. With the foregoing arrangements, the locked section 52 is locked by the locking section 51 when the swing door 7 is opened, so that the swing door 7 is restricted from being moved in the direction in which the swing door 7 opens. Thus, the slide door 6 does not open even when the slide door outer handle 8 or the slide door inner handle 9 is operated to attempt to open the slide door 6 while the swing door 7 is open. Thus, the vehicle door structure 1 reliably prevents the slide door 6 from being opened when the swing door 7 is open.

The embodiment described above is not intended to be restrictive of the present invention. The embodiment, while having been exemplarily described to include the slide door lock unit 50, may exclude the slide door lock unit 50. In this case, a mechanism to be described below may replace the slide door lock unit 50.

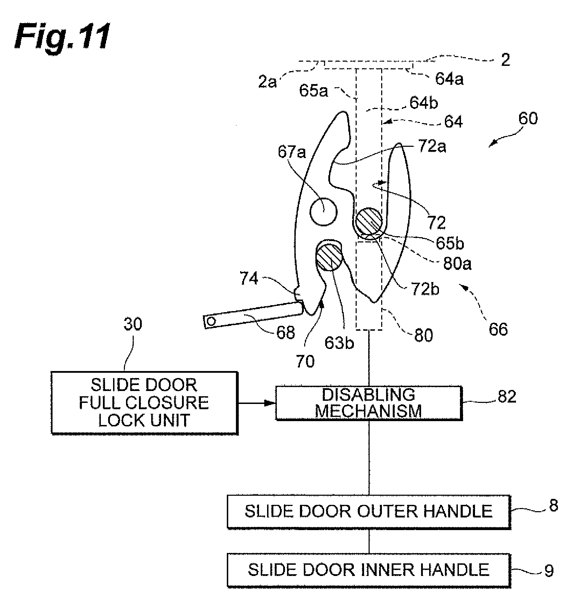

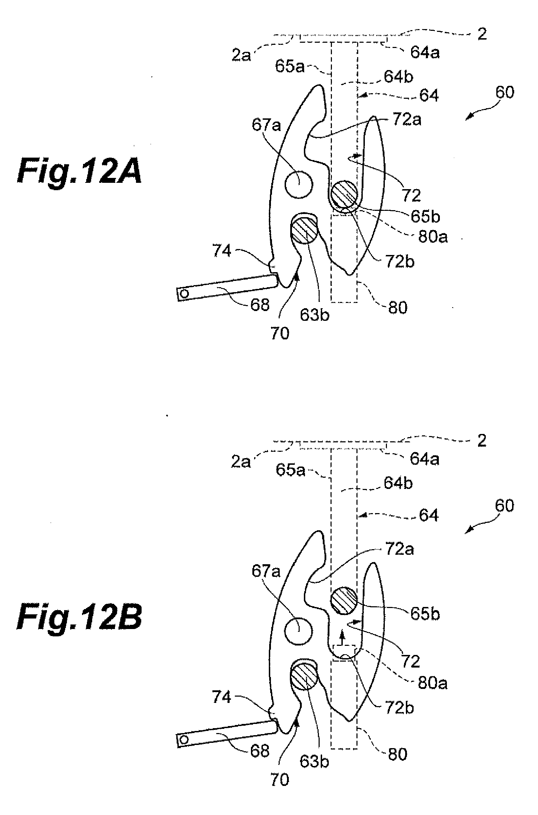

FIG. 11 is a diagram illustrating a lock unit of a vehicle door structure according to another embodiment. As illustrated in FIG. 11, a lock unit 60A includes a detector 80 and a disabling mechanism 82. The detector 80 detects the second striker 64. Specifically, the detector 80 detects whether the second striker 64 is located at the second portion 72b of the second engagement portion 72 in the engagement body 67. The detector 80, for example, includes an abutment portion 80a on which the second striker 64, when located at the second portion 72b, abuts. The abutment portion 80a is urged toward the second striker 64. As illustrated in FIG. 12A, a condition under which the urging force is resisted is maintained when the abutment portion 80a abuts on the second striker 64. When the abutment portion 80a is spaced away from the second striker 64 as illustrated in FIG. 12B, the abutment portion 80a protrudes toward the second striker 64 because of the urging force acting thereon.

The detector 80 is connected to the disabling mechanism 82. The disabling mechanism 82 is connected to the slide door outer handle 8 and the slide door inner handle 9. The disabling mechanism 82 disables the operation on the slide door outer handle 8 and the slide door inner handle 9 when the second striker 64 is not located at the second portion 72b (the abutment portion 80a protrudes) at the fully open position of the slide door 6. The disabling mechanism 82 disables the operation on the slide door outer handle 8 and the slide door inner handle 9 when the detector 80 detects that the second striker 64 is not located at the second portion 72b. Specifically, the disabling mechanism 82 is mechanically connected to the abutment portion 80a of the detector 80 by, for example, a cable and thus motion of the abutment portion 80a is imparted to the disabling mechanism 82. Depending on the motion of the abutment portion 80a, the disabling mechanism 82 disables or enables the operation on the slide door outer handle 8 and the slide door inner handle 9 for closing, specifically, the swing motion of the locking bar 68. A known mechanism may be employed for the disabling mechanism 82 and any detailed descriptions of the mechanism will be omitted.

When the second striker 64 is not located at the second portion 72b, specifically, when the swing door 7 is open, the disabling mechanism 82 of the lock unit 60A disables the operation on the slide door outer handle 8 and the slide door inner handle 9. Thus, the locked condition of the slide door 6 can be prevented from being released when the swing door 7 is open. As a result, the slide door 6 can be reliably prevented from being opened when the swing door 7 is open. It is noted that the detector 80 and the disabling mechanism 82 may be configured so as to be controlled electrically. Specifically, the detector 80 may, for example, be an optical sensor. In this case, the detector 80 outputs a detection signal to the disabling mechanism 82. The disabling mechanism 82 disables the operation on the slide door outer handle 8 and the slide door inner handle 9 in accordance with the reception of the detection signal.

The embodiment has been exemplarily described to include the lock unit 60, in which the first striker 62 is disposed on the guide unit 14 of the swing door 7 and the second striker 64 and the engagement mechanism 66 are disposed on the upper portion of the swing door 7 and the upper portion of the vehicle body 2. The positions at which these different elements of the lock unit 60 are disposed are nonetheless limited to the foregoing. For example, the lock unit 60 may include the first striker 62 disposed on the guide unit 16 and the second striker 64 and the engagement mechanism 66 disposed on the lower portion of the swing door 7 and the lower portion of the vehicle body 2.

The embodiment has been exemplarily described such that the engagement body 67 is disposed so as to be rotatable when the first striker 62 advances or retracts as the slide door 6 is moved. The embodiment has been further exemplarily described such that the engagement body 67 is rotated by the advancing movement of the first striker 62 to thereby engage with the first striker 62 and release engagement with the second striker 64 and rotated by the retracting movement of the first striker 62 to thereby release engagement with the first striker 62 and engage with the second striker 64. The engagement body may nonetheless be configured in any other manner, specifically, the engagement body is required only to engage with the second striker 64 at any position of the slide door 6 other than the fully open position and to engage with the first striker 62 and release engagement with the second striker 64 at the fully open position of the slide door 6.

In the embodiment described above, the vehicle door structure 1 is applied to one side of the vehicle body 2. The vehicle door structure 1 may nonetheless be applied to both sides of the vehicle body 2 or to a rear portion of the vehicle body 2.

## Claims

1. A vehicle door structure compositing:
a slide door configured to open and close a first part of a door opening disposed in a vehicle body;
a swing door configured to open and close, with the slide door, a second part of the door opening; and
a lock mechanism configured to lock the swing door with respect to the vehicle body at any position of the slide door other than a fully open position and to lock the slide door with respect to the swing door and cancel a locked condition of the swing door with respect to the vehicle body at the fully open position of the slide door.

2. The vehicle door structure according to claim 1, wherein
the lock mechanism includes:
a first locked section disposed at a front end portion of the slide door;
a second locked section disposed on the vehicle body on a front end portion side at a fully closed position of the swing door; and
an engagement body disposed on the swing door, the engagement body engaging with the second locked section at any position of the slide door other than the fully open position, and the engagement body engaging with the first locked section and releasing engagement with the second locked section at the fully open position of the slide door.

3. The vehicle door structure according to claim 2, wherein the engagement body is disposed so as to be rotatable when the first locked section advances or retracts as the slide door is moved, and the engagement body is rotated in a first direction by advancing movement of the first locked section to engage with the first locked section and release engagement with the second locked section and rotated in a second direction that is opposite to the first direction by retracting movement of the first locked section to release engagement with the first locked section and engage with the second locked section.

4. The vehicle door structure according to claim 3, wherein
the engagement body includes a first engagement portion configured to engage with the first locked section and a second engagement portion configured to engage with the second locked section, and
the second engagement portion includes a first portion at which the second locked section is located at any position of the slide door other than the fully open position and a second portion at which the second locked section is located at the fully open position of the slide door, the second portion being opposed to the vehicle body at the fully open position of the slide door.

5. The vehicle door structure according to any one of claims 1 to 4, further comprising:
a lock unit configured to lock the slide door with respect to the swing door, wherein
the lock unit includes:
a protruding section disposed on the swing door, the protruding section protruding toward the vehicle body when the swing door is open; and
a locked section disposed on the slide door, the locked section being located between the vehicle body and the swing door at the fully open position of the slide door to be locked by the protruding section.

6. The vehicle door structure according to claim 4, further comprising:
a disabling mechanism configured to disable, when the second locked section is not located at the second portion at the fully open position of the slide door, an operation of a handle controlling opening and closing of the slide door.
